# EUROPEAN PATENT APPLICATION

(11) **EP 4 648 450 A2**
(43) Date of publication of application: **12.11.2025**
(21) Application number: 25205518.1
(22) Date of filing: 05.10.2021
(51) Int. Cl.: H04W 8/22

(54) **NETWORK NODE AND COMMUNICATION METHOD**

(62) Divisional of application: 21959872.9
(71) Applicant: NTT DOCOMO, INC., Tokyo 100-6150 (JP)
(72) Inventor: Minokuchi, Atsushi, Chiyoda-ku, Tokyo, 100-6150 (JP); Sama, Malla Reddy, 80687 Munich (DE)
(74) Representative: Hoffmann Eitle

(57) **Abstract**

A network node according to an aspect of the present disclosure includes: a reception section that receives information on willingness of a terminal to participate in work implemented by a network node, and a terminal capability related to the work; and a control section that selects a terminal to participate in the work based on the information on the willingness and the terminal capability.

## Description

### Technical Field

The present disclosure relates to a network node and a communication method.

### Background Art

As requirements in New Radio (NR: also referred to as "5G"), which is a successor system to Long Term Evolution (LTE), studies have been carried out on technologies realizing increased system capacity, a high data transmission rate, low latency, simultaneous connection of a large number of terminals, low cost, power saving, etc.

5G-Advanced/6G, which is enhanced 5G, assumes a use case where "a terminal participates in joint work in preparation for a network (NW) to provide values (e.g., participation in sensing data collection, federated learning, etc.)". Note that the network here may mean a core network (CN).

In relation to the sensing data collection, 5G-Advanced/6G assumes the use of information radio-sensed by a terminal and/or a base station for a variety of purposes.

Here, the radio sensing may mean that a terminal and/or a base station receives a radio signal disturbed by the surrounding environment during propagation and extracts required information from the received radio signal. Radio-sensed information or radio-sensing information may mean the information extracted in such a manner.

For example, Non Patent Literature (hereinafter, referred to as NPL) 1 describes examples of using the radio sensing information for the following purposes:
- Using the radio sensing information, in addition to existing sensors, for collision avoidance of vehicles/unmanned aerial vehicles (UAVs), route selection, hazard detection, regulatory compliance, etc.;
- Environment mapping: using the radio sensing information to recognize surroundings, such as landmarks, and reconstruct a two-dimensional/three-dimensional map of the environment, which may be applied for position accuracy improvement or to environment-related applications, etc.;

- Weather/air pollution monitoring: using the radio sensing information as a replacement for an existing hygrometer, for example, since electromagnetic waves are affected by humidity;
- Real-time monitoring: using the radio sensing information for intrusion detection, etc.

In addition, NPL 2, for example, discloses a basic system for such radio sensing. The basic system for radio sensing includes, for example, a reflective objet (target from which information is sensed), a transmitter (terminal or base station transmitting a radio signal to the target), a receiver (terminal or base station detecting sensing information based on reflection of the radio signal from the target), an initiator (terminal or network function (NF) requesting the sensing information to the receiver), and an aggregation point/device (terminal or sensing server aggregating the sensing information).

### Citation List

### Non Patent Literature

NPL 1
   "New SID: 5G Architecture enhancements for Harmonized Communication and Sensing service", S2-2106022, 3GPP TSG-WG SA2 Meeting #146 e-meeting, 3GPP, August, 2021
NPL2
   "New SID on Study on Sensing based services", S2-2106378, 3GPP TSG SA2 Meeting #146E (e-meeting), 3GPP, August, 2021

### Summary of Invention

Although the use case where a terminal participates in joint work implemented by a network is taken into consideration as described above, a system for a network to check and select a terminal to participate in joint work has not been established.

An aspect of the present disclosure facilitates providing a network node and a communication method each capable of checking and selecting a terminal to participate in joint work.

A network node according to an aspect of the present disclosure includes: a reception section that receives information on willingness of a terminal to participate in work implemented by a network node, and a terminal capability related to the work; and a control section that selects a terminal to participate in the work based on the information on the willingness and the terminal capability.

A communication method according to an aspect of the present disclosure includes: receiving, by a network node, information on willingness of a terminal to participate in work implemented by a network node, and a terminal capability related to the work; and selecting, by the network node, a terminal to participate in the work based on the information on the willingness and the terminal capability.

### Brief Description of Drawings

FIG. 1 illustrates an example of a communication system according to an embodiment of the present disclosure;
FIG. 2 illustrates an exemplary indication of willingness to participate and a capability by the type of joint work according to an embodiment of the present disclosure;
FIG. 3 illustrates exemplary orchestration or selection of a joint work participating UE and/or gNB according to an embodiment of the present disclosure;
FIG. 4A illustrates exemplary selection of the joint work participating UE according to an embodiment of the present disclosure;
FIG. 4B illustrates exemplary selection of the joint work participating gNB according to an embodiment of the present disclosure;
FIG. 5 illustrates exemplary radio sensing information collection and aggregation and radio sensing data generation according to an embodiment of the present disclosure;
FIG. 6 illustrates other exemplary radio sensing information collection and aggregation and radio sensing data generation according to an embodiment of the present disclosure;
FIG. 7 illustrates exemplary processing after the radio sensing data generation according to an embodiment of the present disclosure;
FIG. 8 illustrates an example of a terminal according to an embodiment of the present disclosure;
FIG. 9 illustrates an example of a base station according to an embodiment of the present disclosure;
FIG. 10 illustrates an example of a joint work performance apparatus according to an embodiment of the present disclosure;
FIG. 11 illustrates an example of a joint work participating terminal orchestration apparatus according to an embodiment of the present disclosure; and
FIG. 12 illustrates an exemplary hardware configuration of the terminal, the base station, the joint work performance apparatus, the joint work participating terminal orchestration apparatus, or other network nodes according to an embodiment of the present disclosure.

### Description of Embodiments

Hereinafter, an embodiment of the present disclosure will be described with reference to the accompanying drawings. Note that the embodiment to be described below is merely an example, and an embodiment to which the present disclosure is applied is not limited to the embodiment below.

The existing technology may be appropriately used for an operation of a radio communication system according to an embodiment of the present disclosure. The existing technology includes but not limited to existing LTE or existing 5G, for example.

The names of nodes, signals, etc. in the following description are from the current 5G specification (or LTE specification), but different names may be used for nodes, signals, etc. having the same functions as those in the following description.

For example, in an embodiment of the present disclosure, the terms used in the existing LTE are sometimes used, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH). The terms in NR corresponding to the above terms are NR-SS, NR-PSS, NR-SSS, NR-PBCH, NR-PRACH, NR-PDCCH, NR-PDSCH, NR-PUCCH, and NR-PUSCH. Note that "NR-" is not always necessary for a signal used in NR.

### (Exemplary System Configuration)

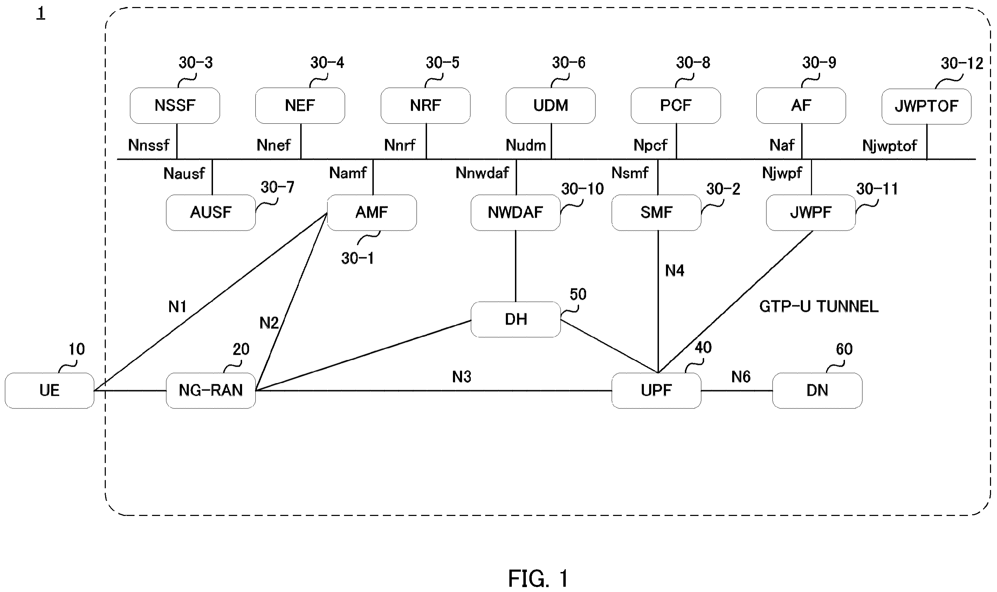

FIG. 1 illustrates an example of communication system 1 according to an embodiment of the present disclosure. Communication system 1 is composed of, for example, user equipment (UE; may be referred to as a (user) terminal) 10, and a plurality of network nodes 20, 30-1 to 30-12 (maybe referred to as NFs), 40, and 50. Although a single network node supports a single function in the following description, a single network node may implement a plurality of functions and a plurality of network nodes may implement a single function. In addition, the "connection" described below may be logical connection or physical connection.

Next generation-radio access network (NG-RAN) 20 is a network node having a radio access function, and may be, for example, next generation node B (gNB or may be referred to as a base station) 20. NG-RAN 20 is connected to UE 10, access and mobility management function (AMF) 30-1, and user plane function (UPF) 40. NG-RAN 20 is also connected to data hub (DH) 50 in some cases, as illustrated in FIG. 1.

AMF 30-1 is a network node having functions such as RAN interface termination, non-access stratum (NAS) termination, registration management, connection management, reachability management, and mobility management. AMF 30-1 is connected to UE 10, NG-RAN 20, session management function (SMF) 30-2, network slice selection function (NSSF) 30-3, network exposure function (NEF) 30-4, network repository function (NRF) 30-5, unified data management (UDM) 30-6, authentication server function (AUSF) 30-7, policy control function (PCF) 30-8, application function (AF) 30-9, network data analytics function (NWDAF) 30-10, joint work performance function (JWPF) 30-11, and joint work participating terminal orchestration function (JWPTOF) 30-12.

AMF 30-1, SMF 30-2, NSSF 30-3, NEF 30-4, NRF 30-5, UDM 30-6, AUSF 30-7, PCF 30-8, AF 30-9, NWDAF 30-10, JWPF 30-11, and JWPTOF 30-12 are network nodes connected to each other via interfaces based on the respective services: Namf, Nsmf, Nnssf, Nnef, Nnrf, Nudm, Nausf, Npcf, Naf, Nnwdaf, Njwpf, and Njwptof.

SMF 30-2 is a network node having functions such as session management, UE Internet protocol (IP) address allocation and management, a dynamic host configuration protocol (DHCP) function, an address resolution protocol (ARP) proxy, and a roaming function.

NSSF 30-3 is a network node having functions such as network slice selection for UE to connect, determination of allowed network slice selection assistance information (NSSAI), determination of configured NSSAI, and determination of an AMF set for UE to connect.

NEF 30-4 is a network node having a function of indicating a capability and an event to another NF.

NRF 30-5 is a network node having a function of finding an NF instance to provide a service.

UDM 30-6 is a network node managing subscriber data and authentication data. UDM 30-6 is connected to a user data repository (UDR) that holds the data.

AUSF 30-7 is a network node authenticating a subscriber/UE 10 against the subscriber data held in the UDR.

PCF 30-8 is a network node having a function of controlling a network policy.

AF 30-9 is a network node having a function of controlling an application server.

NWDAF 30-10 is a network node collecting and analyzing data acquired by the network to provide the analysis result.

JWPF 30-11 is a network node instructing one or more UEs 10 and/or NG-RANs 20 to perform joint work (in the present embodiment, transmission, reception and/or intermediate aggregation of radio signals for radio sensing) and to transmit intermediate-aggregated radio sensing information, performing final aggregation of the radio sensing information, and generating meaningful radio sensing data from the final-aggregated radio sensing information. In other words, when the "initiator" in the concept of the above basic system is divided into an initiator and a joint work orchestrator, JWPF 30-11 corresponds to the joint work orchestrator with an additional role of a final aggregation point. Note that "JWPF" is an exemplary name, and any name may be used for the network node as long as it is capable of performing an operation according to an embodiment of the present disclosure. The interface Njwpf based on the service of JWPF 30-11 is also an exemplary name. Note that JWPF 30-11 may also be referred to as a joint work performance apparatus.

JWPTOF 30-12 is a network node checking a capability, willingness to participate, etc. of each UE, selecting UE to participate in joint work (may also be referred to as joint work participating UE), and rewarding (e.g., awarding points, refunding money, etc.) the UE for participating in the joint work. JWPTOF 30-12 may also select gNB to participate in joint work (may also be referred to as joint work participating gNB). Note that "JWPTOF" is an exemplary name, and any name may be used for the network node as long as it is capable of performing an operation according to an embodiment of the present disclosure. The interface Njwptof based on the service of JWPTOF 30-12 is also an exemplary name. Note that JWPTOF 30-12 may also be referred to as a joint work participating terminal orchestration apparatus.

Note that, in the present embodiment, joint work is not limited to radio sensing information collection between JWPF 30-11 and UE 10 and/or NG-RAN 20, and may include federated learning, other sensor information collection, etc. Thus, JWPF 30-11 may be implemented for each joint work. Meanwhile, JWPTOF 30-12 can perform orchestration common to all joint work, and thus it need not be implemented for each joint work.

As illustrated in FIG. 1, JWPF 30-11 configures a GPRS tunneling protocol for user plane (GTP-U) tunnel between JWPF 30-11 and UPF 40 connected to DH 50. This allows JWPF 30-11 to access DH 50 through the user plane (hereinafter referred to as a U-plane) (UPF 40). In a case where DH 50 is accessible from a control plane (hereinafter referred to as a C-plane) via another NF (e.g., NWDAF 30-10 illustrated in FIG. 1), JWPF 30-11 can also access DH 50 from within the 5GC via the C-plane.

UPF 40 is a network node having functions such as an external protocol data unit (PDU) session point interconnecting to NG-RAN 20, DH 50, and data network (DN) 60, packet routing and forwarding, and quality of service (QoS) handling for the user plane, and transmits and receives user data.

For example, a certain UPF 40 and DH 50 may configure a single network slice. In addition, another UPF 40 and DN 60 may configure another network slice, for example. In the radio communication network according to an embodiment of the present disclosure, a plurality of network slices are configured. Note that a single UPF 40 may operate a single network slice, or a single UPF 40 may operate a plurality of network slices.

Further, UPF 40 is physically, for example, one or more computers (servers, etc.). A plurality of resources obtained by logically integrating/dividing hardware resources (CPU, memory, hard disk, network interface, etc.) of the computer can be regarded as a resource pool, and UPF 40 can use each resource in the resource pool as a network slice. The operation of the network slice by UPF 40 is, for example, to manage the association between the network slice and the resource, to start and stop the resource, to monitor the operation status of the resource, and the like.

DH 50 is a network node aggregating various user data on the U-plane from UE 10, i.e., a (general-purpose) data hub for user data. Note that DH 50 may be referred to as a data lake, a data aggregation and distribution intermediary apparatus, or the like.

Here, in a case where a data hub for user data is introduced to N6 (between UPF 40 and DN 60) in 5GS, communication between UPF 40 and the data hub is not necessarily secure. This is because neither integrity protection nor encryption is applied to data passing through N6 according to the current standard specification. From this perspective, DH 50 is placed in the U-plane of 5GC and is in a relationship parallel to N3 illustrated in FIG. 1. That is, DH 50 may be placed between NG-RAN 20 and UPF 40 so that N3 (user plane interface between 5GC and NG-RAN 20) connects NG-RAN 20 and UPF 40.

As illustrated in FIG. 1, DH 50 is connected to a specific UPF 40 via an internal interface in the specific UPF 40. In addition, as described above, DH 50 is also accessible from the C-plane.

There is no method of systemically reducing the amount of traffic in the network while performing radio sensing data collection involving a plurality of terminals and base stations.

In relation to participation of a terminal in joint work, there is no method for the network to check and select the terminal to participate in joint work.

In view of the above, the CN is introduced with above-described JWPF 30-11 that performs radio sensing data collection with UE 10 and/or NG-RAN 20 while reducing the amount of traffic in the NW by placing an intermediate aggregation point, and JWPTOF 30-12 that checks a capability, willingness to participate, etc. of each UE, selects joint work participating UE 10 and/or NG-RAN 20, and rewards the UE participated in the joint work. In the following, procedures involving JWPF 30-11 and JWPTOF 30-12 and associated procedures will be described.

### (Indication of Willingness to Participate and Capability by Type of Joint Work)

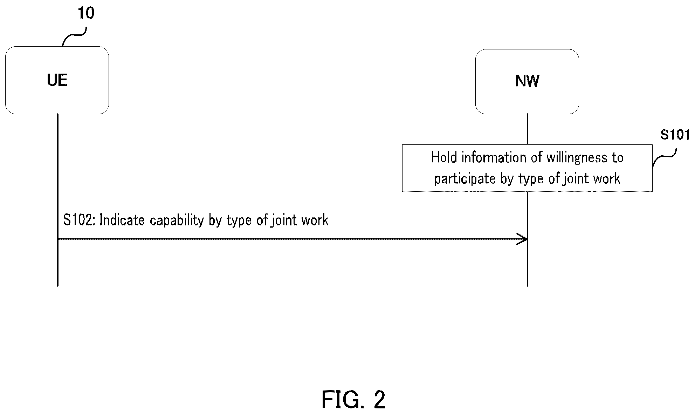

FIG. 2 illustrates an exemplary indication of willingness to participate and a capability by the type of joint work according to an embodiment of the present disclosure.

In step S101, NW (UDM 30-6 in this case) holds, as subscriber data in UDR, for example, information of willingness to participate indicating the willingness of UE 10 to participate by the type of joint work. For example, UE 10 may transmit the information of willingness to participate indicating the willingness to participate by the type of joint work to the NW via AMF 30-1 or the U-plane (UPF 40) during a registration process. Alternatively, the willingness to participate may be collectively configured by AF 30-9. The willingness to participate possibly changes depending on the reward (e.g., point-award, refund, etc.), and thus AF 30-9 or UE 10 can change the willingness to participate via NEF 30-4.

In step S102, UE 10 indicates the capability by the type of joint work to the NW as the UE capability, that is, by appropriately configuring the capability to 5GMM capability IE of a registration request message at the time of the registration procedure. For example, in a case where the joint work is radio sensing information collection, the "capability by the type of joint work" includes capabilities related to a radio sensing scheme, a role (i.e., transmitter, receiver, or intermediate aggregation point), a data aggregation scheme (Null, intermediate aggregation, final aggregation, etc.), and the like. This allows the NW to recognize the capability of UE 10 related to joint work.

Note that the radio sensing scheme may be, for example, information indicating a radio sensing scheme such as the frequency of a radio signal used for radio sensing and the number of antennas.

The transmitter may be, for example, information indicating that it is an apparatus transmitting a radio signal to a target of radio sensing, or information indicating that it is an apparatus transmitting a radio wave to a receiver. Note that, in the following description, the radio signal is referred to as radio for radio sensing, but the name of the radio signal is not limited to the radio for radio sensing. The receiver may be information indicating that it is an apparatus detecting radio sensing information based on a radio signal reflected from a target or a radio signal transmitted from the transmitter. The intermediate aggregation point may be information indicating that it is an apparatus temporarily aggregating the radio sensing information detected by the receiver and transmitting the aggregated information to a different apparatus. The different apparatus may be, for example, an apparatus such as JWPF 30-11 that finally collects the radio sensing information. UE 10 and gNB 20 may play any one or more of the roles, which are the transmitter, receiver, and intermediate aggregation point.

Regarding the data aggregation scheme of the intermediate aggregation point, Null may be, for example, information indicating a process of relaying data. The intermediate aggregation may be, for example, information indicating intermediate collection of sensing information. The final aggregation may be, for example, information indicating final collection of sensing information.

### (Orchestration or Selection of Joint Work Participating UE and/or gNB)

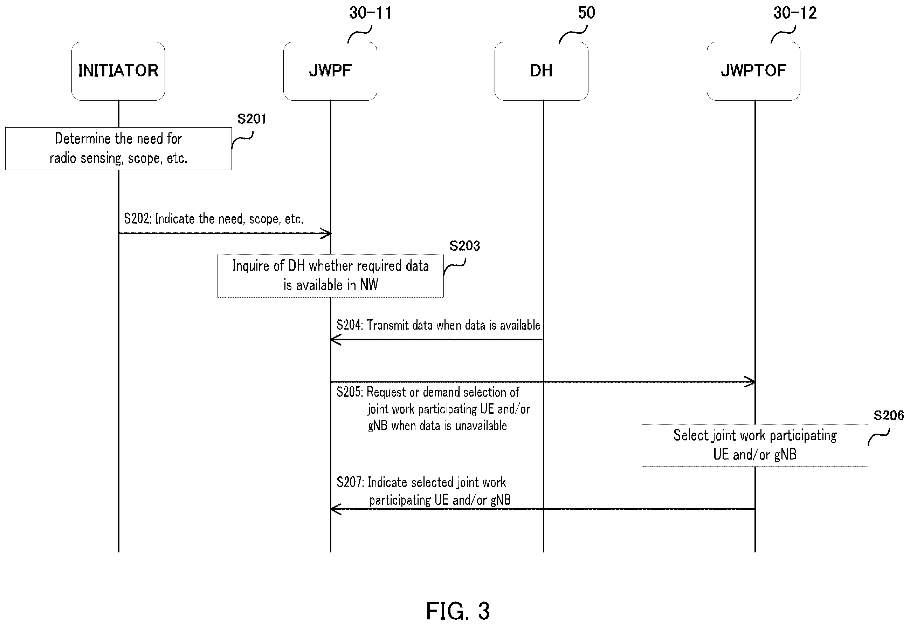

FIG. 3 illustrates exemplary orchestration or selection of joint work participating UE 10 and/or gNB 20 according to an embodiment of the present disclosure.

In step S201, an initiator, which may be an external application, any NF 30-X, or UE 10, determines the need for radio sensing data, a scope of the radio sensing data (e.g., data type, target area, etc.), and the like. As mentioned above, the radio sensing data may mean data generated as meaningful data from radio sensing information.

Note that the data type may be, for example, information indicating contents of the radio sensing information such as a type, position, size, moving direction, moving speed, or condition (humidity when the target is the atmosphere, or speed and depth of breathing during sleeping when the target is a human being) of the radio sensing target object. The target area may be, for example, information indicating an area (e.g., municipality) and/or a range (e.g., traffic intersection, unmanned aerial vehicle flight prohibited area) from which the radio sensing information is collected.

In step S202, the initiator indicates the determined need for radio sensing data, scope of the radio sensing data, etc. to JWPF 30-11 via NEF 30-4.

In step S203, JWPF 30-11 inquires of DH 50 whether the required radio sensing data is available in the NW, based on the indicated scope of the radio sensing data, etc.

When the required radio sensing data is available in the NW as a result of the inquiry to DH 50, DH 50 transmits the required radio sensing data stored in DH 50 to JWPF 30-11 in step S204. That is, JWPF 30-11 acquires the required radio sensing data from DH 50. In this case, JWPF 30-11 does not perform radio sensing information collection, which is joint work with UE 10 and/or gNB 20.

In contrast, when the required radio sensing data is not available in the NW as a result of the inquiry to DH 50, JWPF 30-11 requests or demands, in step S205, JWPTOF 30-12 to select joint work participating UE 10 and/or gNB 20 that collects radio sensing information to generate the required radio sensing data. At the time of this request or demand, JWPF 30-11 indicates, to JWPTOF 30-12, a content of the joint work (radio sensing information collection in the present embodiment) and the total reward upon completion of the joint work.

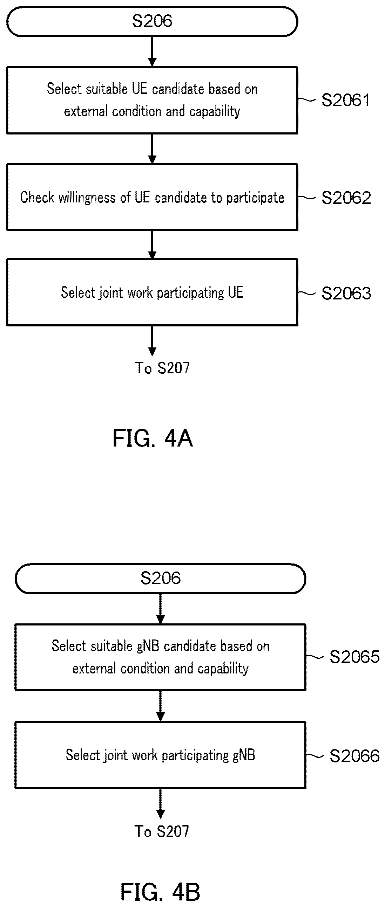

In step S206, JWPTOF 30-12 selects joint work participating UE 10 and/or gNB 20 that collects radio sensing information. Step S206 will be described in detail below with reference to FIG. 4A and FIG. 4B.

In step S207, JWPTOF 30-12 indicates the selected joint work participating UE 10 and/or gNB 20 to JWPF 30-11.

### (Selection of Joint Work Participating UE and/or gNB)

As described above, JWPTOF 30-12 selects joint work participating UE 10 and/or gNB 20 in step S206. In the following, individual descriptions will be given of a case of selecting joint work participating UE 10 and a case of selecting joint work participating gNB 20.

### [Selection of Joint Work Participating UE]

With reference to FIG. 4A indicating the case of selecting joint work participating UE 10, in step S2061, JWPTOF 30-12 selects a UE candidate suitable for the content of the joint work based on an external condition and the acquired capability of UE 10 described above. For example, the external condition may include at least whether UE 10 is located in the joint work target area and whether UE 10 is in an operation mode that allows UE 10 to perform an operation (i.e., whether it is not in a power saving mode). For example, JWPTOF 30-12 may determine whether UE 10 is located in the joint work target area by matching the scope of radio sensing data with position information of UE 10. In addition, JWPTOF 30-12 may determine whether UE 10 is not in a power saving mode by requesting subscription of a service of AMF 30-1 in advance, for example. JWPTOF 30-12 may select UE 10 as the UE candidate suitable for the content of the joint work, at least when UE 10 is located in the joint work target area and UE 10 is in an operation mode that allows UE 10 to perform an operation.

Next, in step S2062, JWPTOF 30-12 checks the willingness of each of the UE candidates selected in step S2061 to participate in the joint work, for example, by acquiring the information of the willingness to participate stored in UDR.

Then, in step S2063, JWPTOF 30-12 selects, as joint work participating UE, a UE candidate confirmed to have the willingness to participate in the joint work in step S2062. After that, the processing proceeds to step S207 of FIG. 3.

Note that, in a case where there is no limitation on the joint work target area, JWPTOF 30-12 need not determine whether UE 10 is located in the joint work target area in step S2061. In addition, JWPTOF 30-12 may select all UEs 10 as the UE candidates regardless of the operation modes of UEs 10 in step S2061, depending on the situation. Further, the order of step S2061 and step S2062 may be reversed.

### [Selection of Joint Work Participating gNB]

With reference to FIG. 4B indicating the case of selecting joint work participating gNB 20, in step S2065, JWPTOF 30-12 selects a gNB candidate suitable for the content of the joint work based on an external condition and the acquired capability of gNB 20 (base station capability) related to joint work. For example, the external condition may include at least whether gNB 20 covers the joint work target area. For example, JWPTOF 30-12 may determine whether gNB 20 covers the joint work target area by matching the scope of radio sensing data with position information of a cell of gNB 20. JWPTOF 30-12 may select gNB 20 as the gNB candidate suitable for the content of the joint work at least when gNB 20 covers the joint work target area. Note that the capability of gNB 20 related to joint work may be the similar to the capability of UE 20 related to joint work, and may be indicated to the NW in the same manner as for UE 20.

Next, in step S2066, JWPTOF 30-12 selects the gNB candidate selected in step S2065 as the joint work participating gNB. Then, the processing proceeds to step S207 of FIG. 3.

Note that, in a case where there is no limitation on the joint work target area, JWPTOF 30-12 need not determine whether gNB 20 covers the joint work target area in step S2065.

### (Radio Sensing Information Collection and Aggregation and Radio Sensing Data Generation)

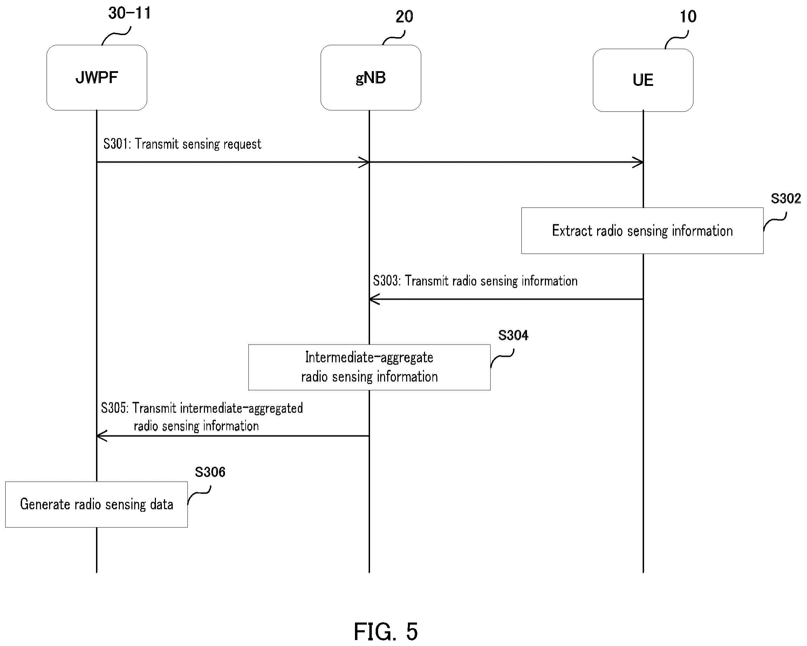

FIG. 5 illustrates exemplary radio sensing information collection and aggregation and radio sensing data generation according to an embodiment of the present disclosure. The processing illustrated in FIG. 5 is performed after the indication of joint work participating UE 10 and/or gNB 20 to JWPF 30-11 in step S207 of FIG. 3.

In step S301, JWPF 30-11 individually transmits a sensing request to the selected joint work participating UE 10 and/or gNB 20. In this example, the numbers of joint work participating UEs 10 and gNBs 20 selected by JWPTOF 30-12 are both one. Needless to say, the numbers of joint work participating UEs 10 and gNBs 20 selected by JWPTOF 30-12 are not limited to one.

The sensing request transmitted in step S301 may include, for example, the target, radio sensing scheme, role (i.e., transmitter, receiver, or intermediate aggregation point), data aggregation scheme (Null, intermediate aggregation, final aggregation, etc.), reporting condition (e.g., immediate, cycle, specified period, etc.), reporting location (e.g., information identifying a destination to which a device that has received the sensing request subsequently transmits (reports) radio sensing information), etc.

For example, JWPF 30-11 may transmit, to joint work participating UE 10 and/or gNB 20, the sensing request in which a field indicating the data aggregation scheme is set to a value indicating intermediate aggregation.

Further, JWPF 30-11 may transmit, to joint work participating UE 10, for example, the sensing request in which a field indicating the role is set to a value indicating a receiver and a field indicating the reporting location is set to a value indicating gNB 20. For example, JWPF 30-11 may also transmit, to joint work participating gNB 20, the sensing request in which a field indicating the role is set to a value indicating an intermediate aggregation point and a field indicating the reporting location is set to a value indicating JWPF 30-11. FIG. 5 will be further described assuming that these sensing requests are transmitted to UE 10 and gNB 20.

In step S302, UE 10, the role of which is configured to be a receiver, extracts radio sensing information.

Since the reporting location is configured to be gNB 20 for UE 10, UE 10 transmits, in step S303, the extracted radio sensing information to gNB 20 according to the reporting condition in the sensing request.

Since the role of gNB 20 is configured to be an intermediate aggregation point, gNB 20 intermediate-aggregates the radio sensing information transmitted by UE 10 in step S304.

Since the reporting location is configured to be JWPF 30-11 for gNB 20, gNB 20 transmits the intermediate-aggregated radio sensing information to JWPF 30-11 in step S305.

In step S306, JWPF 30-11 generates radio sensing data based on the radio sensing information transmitted by gNB 20.

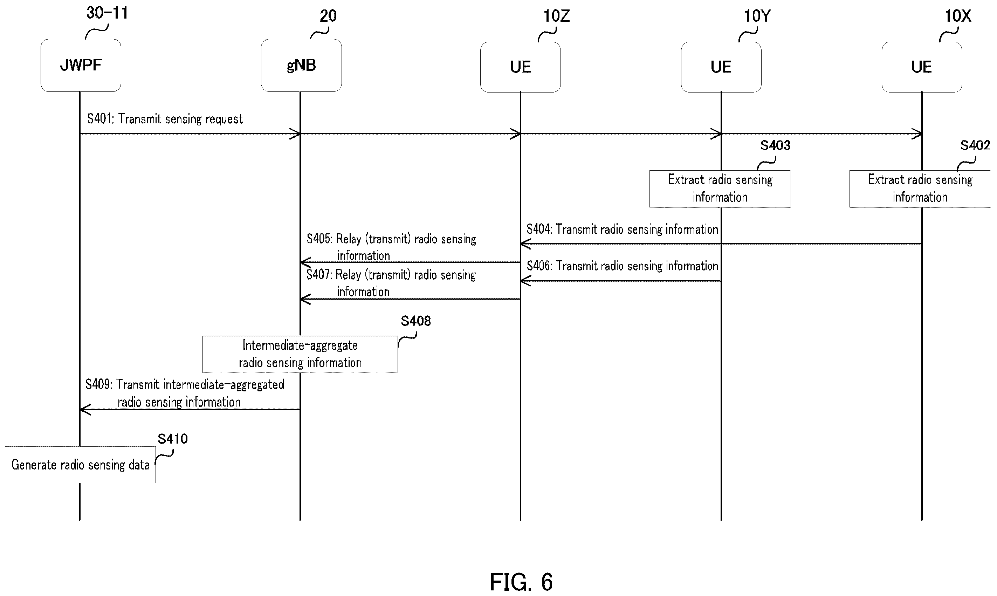

FIG. 6 illustrates other exemplary radio sensing information collection and aggregation and radio sensing data generation according to an embodiment of the present disclosure. The processing illustrated in FIG. 6 is also performed after the indication of joint work participating UE 10 and/or gNB 20 to JWPF 30-11 in step S207 of FIG. 3.

In step S401, JWPF 30-11 individually transmits a sensing request to the selected joint work participating UEs 10 and/or gNB 20. In this example, the numbers of joint work participating UEs 10 and gNBs 20 selected by JWPTOF 30-12 are three (UE 10X, UE 10Y, and UE 10Z) and one, respectively.

Contents of the sensing request transmitted in step S401 is as described above.

For example, JWPF 30-11 may transmit, to joint work participating UEs 10X and 10Y, the sensing request in which a field indicating the role is set to a value indicating a receiver and a field indicating the reporting location is set to a value indicating UE 10Z. Further, JWPF 30-11 may transmit, to joint work participating UE 10Z, for example, the sensing request in which a field indicating the role is set to a value indicating an intermediate aggregation point, a field indicating the data aggregation scheme is set to a value indicating Null, and a field indicating the reporting location is set to a value indicating gNB 20. Here, Null may indicate a process of simply relaying data. For example, JWPF 30-11 may also transmit, to joint work participating gNB 20, the sensing request in which a field indicating the role is set to a value indicating an intermediate aggregation point, a field indicating the data aggregation scheme is set to a value indicating intermediate aggregation, and a field indicating the reporting location is set to a value indicating JWPF 30-11. FIG. 6 will be further described assuming that these sensing requests are transmitted to UE 10X, UE 10Y, UE 10Z, and gNB 20.

In step S402, UE 10X, the role of which is configured to be a receiver, extracts radio sensing information.

In step S403, UE 10Y, the role of which is configured to be a receiver, extracts radio sensing information.

Since the reporting location is configured to be UE 10Z for UE 10X, UE 10X transmits, in step S404, the extracted radio sensing information to UE 10Z according to the reporting condition in the sensing request.

Since the role is configured to be an intermediate aggregation point and the data aggregation scheme is configured to be Null for UE 10Z, UE 10Z relays (transmits) the radio sensing information received from UE 10X to gNB 20 in step S405.

Since the reporting location is configured to be UE 10Z for UE 10Y, UE 10Y transmits, in step S406, the extracted radio sensing information to UE 10Z according to the reporting condition in the sensing request.

Since the role is configured to be an intermediate aggregation point and the data aggregation scheme is configured to be Null for UE 10Z, UE 10Z relays (transmits) the radio sensing information received from UE 10Y to gNB 20 in step S407.

Since the role is configured to be an intermediate aggregation point and the data aggregation scheme is configured to be intermediate aggregation for gNB 20, gNB 20 intermediate-aggregates, in step S408, the radio sensing information transmitted by UE 10X and UE 10Y and relayed by UE 10Z.

Since the reporting location is configured to be JWPF 30-11 for gNB 20, gNB 20 transmits the intermediate-aggregated radio sensing information to JWPF 30-11 in step S409.

In step S410, JWPF 30-11 generates radio sensing data based on the radio sensing information transmitted by gNB 20.

According to the processing illustrated in FIG. 5 and FIG. 6, the role, data aggregation scheme, reporting condition, reporting location, etc. can be variously configured in the sensing request transmitted in step S301 and step S401, thereby realizing flexible reporting (transmission), intermediate aggregation, and final aggregation of the radio sensing information.

In addition, according to the processing illustrated in FIG. 5 and FIG. 6, in step S304 and step S408, gNB 20 can intermediate-aggregate the radio sensing information transmitted by the UE, that is, can temporarily store the radio sensing information, thereby reducing the amount of traffic in the NW. Note that gNB 20 is not the only one playing the role of intermediate aggregation and UE 10 may play the role.

### (Processing After Radio Sensing Data Generation)

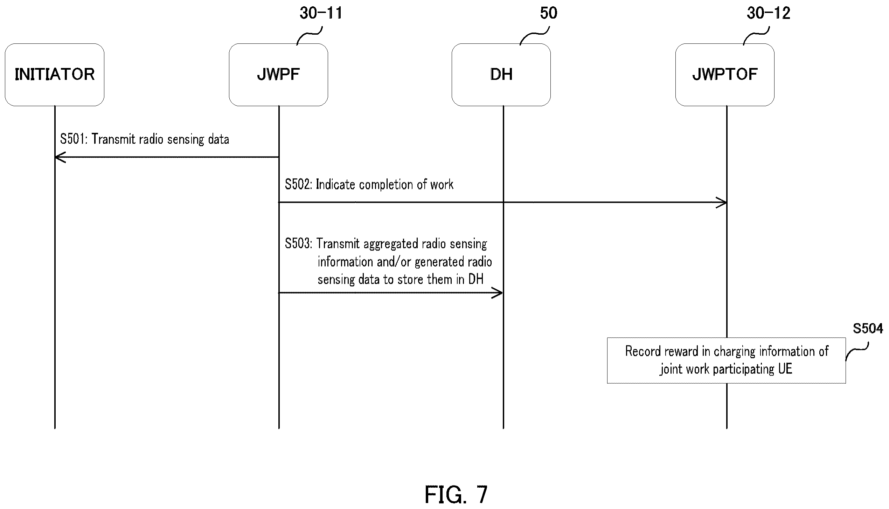

FIG. 7 illustrates exemplary processing after the radio sensing data generation according to an embodiment of the present disclosure. The processing illustrated in FIG. 7 is performed after the radio sensing data generation in step S306 of FIG. 5 and step S410 of FIG. 6.

In step S501, JWPF 30-11 responds to the initiator that has indicated the need for radio sensing, etc. in step S202 of FIG. 3 by transmitting the generated radio sensing data to the initiator.

In step S502, JWPF 30-11 indicates to JWPTOF 30-12 that the (joint) work has been completed.

In step S503, JWPF 30-11 transmits the (final-)aggregated radio sensing information and/or generated radio sensing data to DH 50 to store them in DH 50 for another purpose or future applications.

Upon the indication of the completion of the work, in step S504, JWPTOF 30-12 records the reward (e.g., value obtained by dividing the total reward by the number of joint work participating UEs 10) in charging information of joint work participating UE 10 by a charging function (CHF), for example, based on the total reward indicated from JWPF 30-11 in step S205 of FIG. 3. Rewarding UE 10 participated in joint work in this manner facilitates participation of UE 10 in joint work.

Descriptions have been given above of an example where JWPF 30-11 and JWPTOF 30-12, which are new NFs, are introduced to the CN of 5GS, but the present disclosure is not limited to the example. For example, only JWPF 30-11 or JWPTOF 30-12 in which functions of JWPF 30-11 and JWPTOF 30-12 are integrated may be introduced to 5GS. Alternatively, instead of introducing JWPF 30-11 and JWPTOF 30-12 to 5GS, for example, an existing 5GC NF may implement the above-described functions of JWPF 30-11 and JWPTOF 30-12. For example, a location management function (LMF) or the like may implement the functions of JWPF 30-11 and JWPTOF 30-12.

In a RAN-optimized scenario, gNB 20 may implement the functions of JWPF 30-11 and JWPTOF 30-12. For example, such gNB 20 may activate radio sensing data collection according to the internal logic, select joint work participating UE 10, and perform joint work with the selected UE 10.

### (Apparatus Configuration)

Next, descriptions will be given of exemplary functional configurations of terminal 10, base station 20, joint work performance apparatus 30-11, and joint work participating terminal orchestration apparatus 30-12, which perform the processing and operations described above. Although terminal 10, base station 20, joint work performance apparatus 30-11, and joint work participating terminal orchestration apparatus 30-12 include the functions described in the above examples, terminal 10, base station 20, joint work performance apparatus 30-11, and joint work participating terminal orchestration apparatus 30-12 may include only some of the functions described in the above examples.

### <Terminal 10>

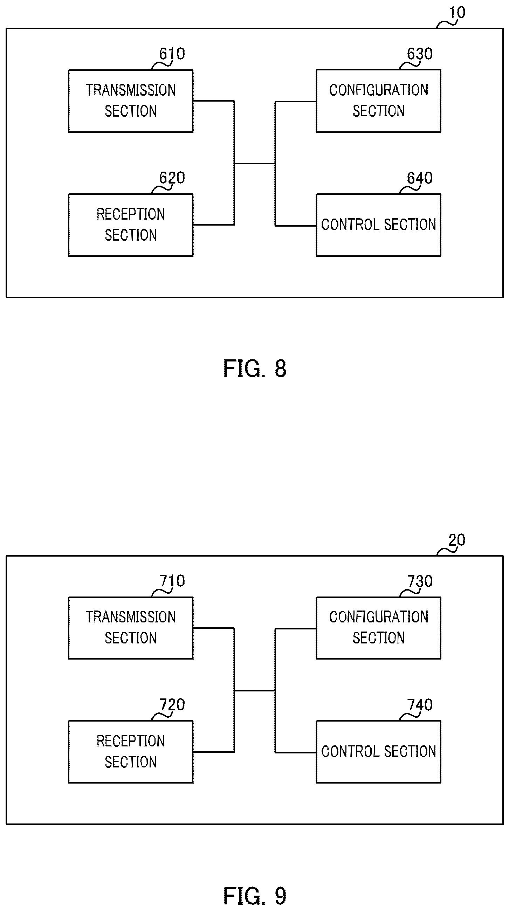

FIG. 8 illustrates an exemplary functional configuration of terminal 10 according to an embodiment of the present disclosure. As illustrated in FIG. 8, terminal 10 includes transmission section 610, reception section 620, configuration section 630, and control section 640. The functional configuration illustrated in FIG. 8 is merely an example. Any names may be used for the function categories and function sections as long as they are capable of performing an operation according to an embodiment of the present disclosure.

Transmission section 610 generates a transmission signal from transmission data, and transmits the generated transmission signal by radio. For example, transmission section 610 transmits radio for radio sensing, willingness to participate by the type of joint work, a capability, the need for radio sensing, scope, radio sensing information, and the like. Reception section 620 receives various types of signals by radio, and acquires a higher layer signal from the received physical layer signal. Further, reception section 620 has a function of receiving an NR-PSS, NR-SSS, NR-PBCH, DL/UL/SL control signal, etc. transmitted from base station 20. For example, reception section 620 receives radio for radio sensing, a sensing request, radio sensing information, radio sensing data, etc. As D2D communication, for example, transmission section 610 transmits a physical sidelink control channel (PSCCH), physical sidelink shared channel (PSSCH), physical sidelink discovery channel (PSDCH), physical sidelink broadcast channel (PSBCH), etc. to another terminal 10, and reception section 620 receives a PSCCH, PSSCH, PSDCH, PSBCH, etc. from another terminal 10. For example, transmission section 610 transmits radio for radio sensing, etc. Reception section 620 receives radio for radio sensing, radio sensing information, etc.

Configuration section 630 stores, in a storage device (storage section), various types of configuration information received from base station 20 by reception section 620, and reads the configuration information from the storage device as needed. Configuration section 630 also stores preconfigured information configured in advance in the storage device. Contents of the configuration information and preconfigured information may include, for example, information related to a PDU session, information related to joint work, and the like. Note that configuration section 630 may be included in control section 640.

Control section 640 controls the entire terminal 10. Control section 640, for example, performs control over communication by a PDU session, communication related to joint work, etc. A functional part for signal transmission in control section 640 may be included in transmission section 610, and a functional part for signal reception in control section 640 may be included in reception section 620.

### <Base Station 20>

FIG. 9 illustrates an exemplary functional configuration of base station 20 according to an embodiment of the present disclosure. As illustrated in FIG. 9, base station 20 includes transmission section 710, reception section 720, configuration section 730, and control section 740. The functional configuration illustrated in FIG. 9 is merely an example. Any names may be used for the function categories and function sections as long as they are capable of performing an operation according to an embodiment of the present disclosure.

Transmission section 710 includes a function of generating a signal to be transmitted to terminal 10 and transmitting the generated signal by radio. In addition, transmission section 710 transmits an inter-network node message to another network node. For example, transmission section 710 transmits radio for radio sensing, radio sensing information, and the like. Reception section 720 includes a function of receiving various types of signals transmitted from terminal 10 and acquiring, for example, higher layer information from the received signals. Transmission section 710 also has a function of transmitting an NRPSS, NR-SSS, NR-PBCH, DL/UL control signal, etc. to terminal 10. Reception section 720 receives an inter-network node message from another network node. For example, reception section 720 receives radio for radio sensing, a sensing request, radio sensing information, etc.

Configuration section 730 stores, in a storage device (storage section), preconfigured information configured in advance and various types of configuration information to be transmitted to terminal 10, and reads the preconfigured information and configuration information from the storage device as needed. Contents of the preconfigured information and configuration information may include, for example, information related to a PDU session, information related to joint work, and the like. Note that configuration section 730 may be included in control section 740.

Control section 740 controls the entire base station 20. Control section 740, for example, performs control over communication by a PDU session, communication related to joint work, etc. Control section 740 also controls communication with terminal 10 based on a UE capability report on a radio parameter received from terminal 10. A functional part for signal transmission in control section 740 may be included in transmission section 710, and a functional part for signal reception in control section 740 may be included in reception section 720.

### <Joint Work Performance Apparatus 30-11>

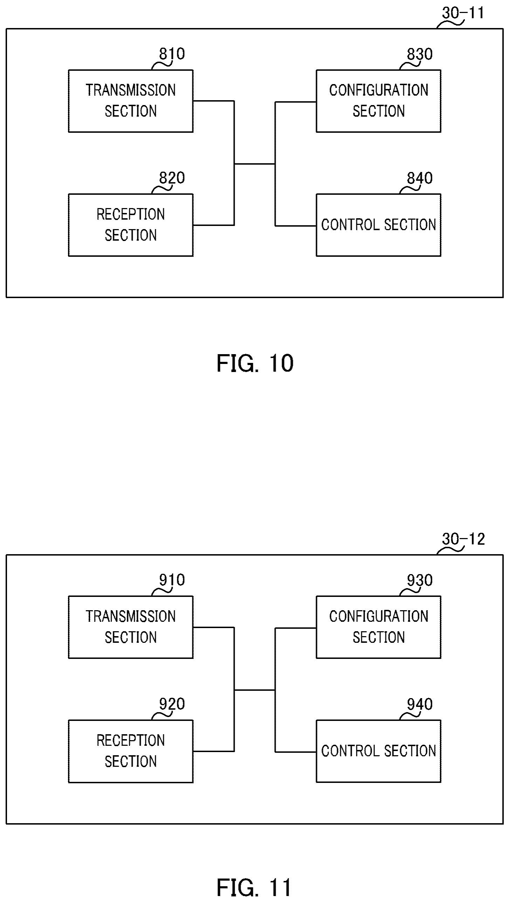

FIG. 10 illustrates an exemplary functional configuration of joint work performance apparatus 30-11 according to an embodiment of the present disclosure. As illustrated in FIG. 10, joint work performance apparatus 30-11 includes transmission section 810, reception section 820, configuration section 830, and control section 840. The functional configuration illustrated in FIG. 10 is merely an example. Any names may be used for the function categories and function sections as long as they are capable of performing an operation according to an embodiment of the present disclosure.

Transmission section 810 includes a function of generating a signal to be transmitted and transmitting the generated signal to a network. For example, transmission section 810 transmits a data inquiry, request or demand for selection of joint work participating terminal 10 and/or base station 20 (including joint work content and total reward), sensing request, radio sensing data, radio sensing information, etc. Reception section 820 includes a function of receiving various types of signals and acquiring, for example, higher layer information from the received signals. For example, reception section 820 receives the need for radio sensing, scope, required data, indication of joint work participating terminal 10 and/or base station 20, radio sensing information, etc.

Configuration section 830 stores, in a storage device (storage section), preconfigured information configured in advance and configuration information, and reads the preconfigured information and configuration information from the storage device as needed. Contents of the preconfigured information and configuration information may include, for example, information related to joint work and the like. Note that configuration section 830 may be included in control section 840.

Control section 840 controls the entire joint work performance apparatus 30-11. In particular, control section 840 performs control over the implementation of joint work as described in the above examples. A functional part for signal transmission in control section 840 may be included in transmission section 810, and a functional part for signal reception in control section 840 may be included in reception section 820.

Control section 840 may determine implementation information for implementing radio sensing and/or intermediate aggregation to be provided to a sensing apparatus and an intermediate aggregation apparatus selected from among terminals and base stations. The sensing apparatus is an apparatus performing radio sensing (i.e., apparatus transmitting radio for radio sensing and/or apparatus receiving radio for radio sensing). The intermediate aggregation apparatus is an apparatus temporarily storing radio sensing information detected and transmitted by the sensing apparatus. Transmission section 810 may transmit the implementation information to the sensing apparatus and/or intermediate aggregation apparatus. Reception section 820 may receive the radio sensing information from the intermediate aggregation apparatus. Reception section 820 may receive a sensing request from an initiator (i.e., terminal, NF, or AF that requests sensing information), and transmission section 810 may respond to the initiator with a sensing response.

Alternatively, control section 840 may determine, from among UEs 10 and gNBs 20, the sensing apparatus that performs radio sensing (i.e., apparatus transmitting radio for radio sensing and/or apparatus receiving radio for radio sensing) and the intermediate aggregation apparatus that temporarily stores radio sensing information detected and transmitted by the sensing apparatus. Reception section 820 may receive the radio sensing information detected by the sensing apparatus, from the intermediate aggregation apparatus determined by control section 840.

Note that UE 10 described in FIG. 5 may correspond to the sensing apparatus and gNB 20 may correspond to the intermediate aggregation apparatus, by way of example. Further, UE 10X and UE 10Y described in FIG. 6 may correspond to the sensing apparatus, and gNB 20 may correspond to the intermediate aggregation apparatus, by way of example.

Control section 840 may, for example, transmit a sensing request including information indicating a transmitter and/or receiver to UE 10 and/or gNB 20, and indicate to UE 10 and/or gNB 20 that it has been determined to be the sensing apparatus. Control section 840 may, for example, transmit a sensing request including information indicating an intermediate aggregation point to UE 10 and/or gNB 20, and indicate to UE 10 and/or gNB 20 that it has been determined to be the intermediate aggregation apparatus.

Control section 840 may transmit, to the intermediate aggregation apparatus, information on a timing of radio sensing information transmission to joint work performance apparatus 30-11. For example, control section 840 may transmit the information on the transmission timing in the reporting condition of the sensing request.

The information on the transmission timing may include, for example, the time of day, cycle, and/or period in which the amount of traffic in the CN of 5GS is reduced. The time of day, cycle, and/or period in which the amount of traffic is reduced may be determined by artificial intelligence (AI) such as deep learning, for example. The artificial intelligence may learn the amount of traffic in the CN and determine the time of day, cycle, and/or period in which the amount of traffic is reduced. Functions of the artificial intelligence may be included in control section 840, or may be included in an NF such as NWDAF 30-10 placed in the CN. The intermediate aggregation apparatus determined by control section 840 may transmit the temporarily stored radio sensing information to joint work performance apparatus 30-11 based on the information on the transmission timing transmitted from control section 840.

Control section 840 may determine, from among UEs 10 and gNBs 20, a relay apparatus that receives the radio sensing information detected and transmitted by the sensing apparatus and that transmits the information to the intermediate aggregation apparatus. Control section 840 may, for example, transmit a sensing request including Null to UE 10 and/or gNB 20, and indicates to UE 10 and/or gNB 20 that it has been determined to be the relay apparatus. The relay apparatus determined to be the relay apparatus by control section 840 may receive the radio sensing information transmitted from the sensing apparatus and transmit the information to the intermediate aggregation apparatus.

Note that UE 10Z described in FIG. 6 may correspond to the relay apparatus, by way of example.

Control section 840 may determine the sensing apparatus and intermediate aggregation apparatus when target radio sensing information is not stored in DH 50 placed in the CN. In other words, when the target radio sensing information is stored in DH 50 placed in the CN, control section 840 may acquire the radio sensing information from DH 50 without determining the sensing apparatus and intermediate aggregation apparatus.

### (Effect)

The above configuration facilitates reducing the amount of traffic in the CN. For example, the intermediate aggregation apparatus can temporarily store the radio sensing information of the sensing apparatus, perform intermediate processing, compress the amount of data, and transmit the radio sensing information to joint work performance apparatus 30-11 when the amount of traffic in the CN is low, thereby reducing the amount of traffic in the CN.

Further, in a case where control section 840 determines UE 10 as the sensing apparatus and gNB 20 as the intermediate aggregation apparatus, UE 10 need not temporarily store the radio sensing information. Thus, UE 10 can reduce the storage space of the storage device used for storing the radio sensing information.

### <Joint Work Participating Terminal Orchestration Apparatus 30-12>

FIG. 11 illustrates an exemplary functional configuration of joint work participating terminal orchestration apparatus 30-12 according to an embodiment of the present disclosure. As illustrated in FIG. 11, joint work participating terminal orchestration apparatus 30-12 includes transmission section 910, reception section 920, configuration section 930, and control section 940. The functional configuration illustrated in the drawing is merely an example. Any names may be used for the function categories and function sections as long as they are capable of performing an operation according to an embodiment of the present disclosure.

Transmission section 910 includes a function of generating a signal to be transmitted and transmitting the generated signal to a network. For example, transmission section 910 transmits an indication of joint work participating terminal 10 and/or base station 20, etc. Reception section 920 includes a function of receiving various types of signals and acquiring, for example, higher layer information from the received signals. For example, reception section 920 receives an indication of a capability of terminal 10 and/or base station 20, a request or demand for selection of joint work participating terminal 10 and/or base station 20 (including joint work content and total reward), an indication of completion of joint work, etc.

Configuration section 930 stores, in a storage device (storage section), preconfigured information configured in advance and configuration information, and reads the preconfigured information and configuration information from the storage device as needed. Contents of the preconfigured information and configuration information may include, for example, information related to joint work and the like. Note that configuration section 930 may be included in control section 940.

Control section 940 controls the entire joint work participating terminal orchestration apparatus 30-12. In particular, control section 940 performs control over the selection of terminal 10 and/or base station 20 to participate in joint work as described in the above examples. A functional part for signal transmission in control section 940 may be included in transmission section 910, and a functional part for signal reception in control section 940 may be included in reception section 920.

Reception section 920 may acquire information on the willingness of UE 10 to participate in (joint) work performed by a network node, and the UE capability related to the work. Control section 940 may select UE 10 to participate in the work based on the information on the willingness to participate and the UE capability acquired by reception section 920.

Note that the network node may be joint work performance apparatus 30-11, joint work participating terminal orchestration apparatus 30-12, or another NF. The UE capability related to the work may include capabilities related to a radio sensing scheme, role (transmitter, receiver, or intermediate aggregation point), data aggregation scheme (Null, intermediate aggregation, final aggregation, etc.), and the like.

Control section 940 may select UE 10 to participate in the work based further on whether UE 10 is located in the target area of the work and whether UE 10 is in an operation mode that allows UE 10 to perform an operation.

Reception section 920 may receive the total reward upon the completion of the work. Control section 940 may reward UE 10 participated in the work based on the received total reward.

By way of example, the reward may be a point-award, refund, or the like. Further, the reward for UE 10 participated in the work may be a point-award, refund, or the like of a value obtained by dividing the total reward by the number of UEs 10 participated in the work.

Such joint work participating terminal orchestration apparatus 30-12 may be different from a network node implementing the work.

By way of example, the network node implementing the work may be joint work performance apparatus 30-11.

Reception section 920 may acquire the base station (gNB) capability related to the work. Control section 940 may select gNB 20 to participate in the work based on the base station capability acquired by reception section 920.

Control section 940 may select gNB 20 to participate in the work based further on whether gNB 20 is located in the target area of the work.

### (Effect)

The above configuration makes it possible to check the willingness of UE 10 to participate in joint work and the capability of UE 10 related to joint work, and to select UE 10 to participate in joint work based on the willingness to participate and capability of UE 10.

It is also possible to select UE 10 more suitable for the content of joint work based further on the external condition other than the willingness to participate and capability of UE 10.

Further, rewarding UE 10 participated in joint work facilitates participation of UE 10 in joint work.

Furthermore, it is possible to perform orchestration common to all joint work, and thus joint work participating terminal orchestration apparatus 30-12 need not be implemented for each joint work.

In addition, it is possible to check the capability of gNB 20 related to joint work and select gNB 20 to participate in joint work based on the capability of gNB 20.

It is also possible to select gNB 20 more suitable for the content of joint work based further on the external condition other than the capability of gNB 20.

### (Hardware Configuration)

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

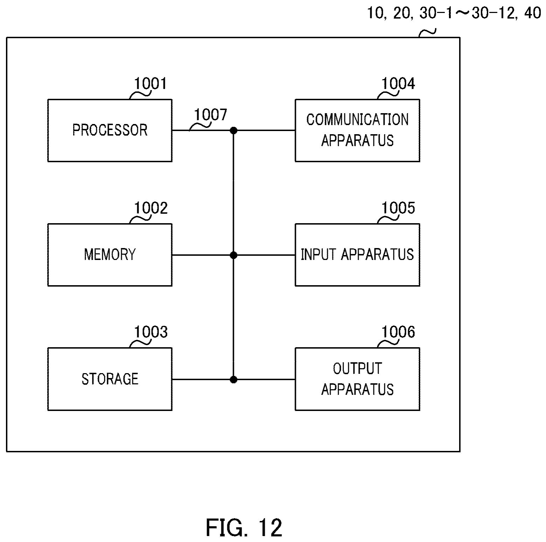

For example, the base station, the terminal, and the like according to an embodiment of the present disclosure may function as a computer that executes processing of a wireless communication method of the present disclosure. FIG. 12 illustrates an exemplary hardware configuration of the terminal, the base station, the joint work performance function, joint work participating terminal orchestration function, and other network nodes according to one embodiment of the present disclosure. Physically, terminal 10, base station 20, joint work performance apparatus 30-11, joint work participating terminal orchestration apparatus 30-12, and other network nodes as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of terminal 10, base station 20, joint work performance apparatus 30-11, joint work participating terminal orchestration apparatus 30-12, and other network nodes may include one apparatus or a plurality of apparatuses illustrated in the drawings or may not include part of the apparatuses.

The functions of terminal 10, base station 20, joint work performance apparatus 30-11, joint work participating terminal orchestration apparatus 30-12, and other network nodes are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 640, control section 740, control section 840, control section 940, and the like as described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 640 of terminal 10, control section 740 of base station 20, control section 840 of joint work performance apparatus 30-11, or control section 940 of joint work participating terminal orchestration apparatus 30-12 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 610, reception section 620, transmission section 710, reception section 720, transmission section 810, reception section 820, transmission section 910, reception section 920 and the like as described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) that makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, terminal 10, base station 20, joint work performance apparatus 30-11, joint work participating terminal orchestration apparatus 30-12, and other network nodes may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### (Notification of Information and Signaling)

The notification of information is not limited to the aspects/embodiments described in the present disclosure, and the information may be notified by another method. For example, the notification of information may be performed out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### (Application System)

The aspects/embodiments described in the present specification may be applied to at least one of systems using Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### (Processing Procedure and the like)

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### (Operation of Base Station)

Specific operations which are described in the present disclosure as being performed by the base station may sometimes be performed by an upper node depending on the situation. Various operations performed for communication with a user terminal in a network constituted by one network node or a plurality of network nodes including a base station can be obviously performed by at least one of the base station and a network node other than the base station (examples include, but not limited to, MME or S-GW). Although there is one network node in addition to the base station in the case illustrated above, a plurality of other network nodes may be combined (for example, MME and S-GW).

### (Direction of Input and Output)

The information and the like (see "Information and Signals") can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### (Base Station (Radio Base Station))

The terms "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### (Terminal)

The terms "Mobile Station (MS)", "user terminal", "User Equipment (UE)", and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### (Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user terminal. For example, the aspects/embodiments of the present disclosure may find application in a configuration that results from replacing communication between the base station and the user terminal with communication between multiple user terminals (such communication may, for example, be referred to as device-to-device (D2D), vehicle-to-everything (V2X), or the like). In this case, terminal 10 may be configured to have the functions that base station 20 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 20 is configured to have the functions that terminal 10 described above has.

### (Meaning and Interpretation of Terms)

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming", "expecting", "considering", and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

### (Reference Signal)

The reference signal can also be abbreviated as an RS and may also be called as a pilot depending on the applied standard.

### (Meaning of "Based on")

The description "based on" used in the present disclosure does not mean "based only on", unless otherwise specified. In other words, the description "based on" means both of "based only on" and "based at least on".

### ("First" and "Second")

Any reference to elements by using the terms "first", "second", and the like used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### (Means)

The "section" in the configuration of each apparatus may be replaced with "means", "circuit", "device", or the like.

### (Open Form)

In a case where terms "include", "including", and their modifications are used in the present disclosure, these terms are intended to be inclusive like the term "comprising". Further, the term "or" used in the present disclosure is not intended to be an exclusive "or".

### (Time Unit such as TTI, Frequency Unit such as RB, and Radio Frame Configuration)

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on the basis of TTI to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell", "carrier", and the like in the present disclosure may be replaced with "BWP".

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a", "an", and "the" in English, for example, are added in the present disclosure by translation, nouns following these articles may have the same meaning as used in the plural.

In the present disclosure, the expression "A and B are different" may mean that "A and B are different from each other". Note that, the expression may also mean that "A and B are different from C". The expressions "separated" and "coupled" may also be interpreted in the same manner as the expression "A and B are different".

### (Variations and the like of Aspects)

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### Industrial Applicability

An aspect of the present disclosure is useful for radio communication systems.

### Reference Signs List

10 UE (Terminal)
20 NG-RAN (gNB, Base station)
30-11 JWPF (Joint work performance apparatus)
30-12 JWPTOF (Joint work participating terminal orchestration apparatus)
610, 710, 810, 910 Transmission section
620, 720, 820, 920 Reception section
630, 730, 830, 930 Configuration section
640, 740, 840, 940 Control section

Further embodiments are as followed
E1 A network node, comprising:
   a reception section that receives information on willingness of a terminal to participate in work implemented by a network node, and a terminal capability related to the work; and
   a control section that selects a terminal to participate in the work based on the information on the willingness and the terminal capability.
E2 The network node according to E1, wherein the control section selects the terminal to participate in the work based further on whether the terminal is located in a target area of the work and whether the terminal is in an operation mode that allows the terminal to perform the work.
E3 The network node according to E1, wherein,
   the reception section receives a total reward for completion of the work, and
   the control section rewards a terminal participated in the work, based on the total reward.
E4 The network node according to E1, wherein the network node is different from the network node implementing the work.
E5 The network node according to E1, wherein,
   the reception section acquires a base station capability related to the work, and
   the control section selects a base station to participate in the work, based on the base station capability.
E6 The network node according to E5, wherein the control section selects the base station to participate in the work based further on whether the base station is located in a target area of the work.
E7 A communication method, comprising:
   receiving, by a network node, information on willingness of a terminal to participate in work implemented by a network node, and a terminal capability related to the work; and
   selecting, by the network node, a terminal to participate in the work based on the information on the willingness and the terminal capability.

## Claims

1. A network node that configures a system defined in 3rd Generation Partnership Project (3GPP), the network node comprising:
a reception section that performs reception of a request for selection of a terminal that is used in federated learning; and
a control section that selects a candidate for the terminal that is used in the federated learning in response to the reception of the request for the selection.

2. The network node according to claim 1, wherein
the control section selects, among terminals that are possibly allowed to participate in the federated learning, the candidate for the terminal that is used in the federated learning.

3. The network node according to claim 2, wherein
the control section selects, among the terminals that are possibly allowed to participate in the federated learning, the candidate for the terminal that is used in the federated learning, based on whether to be located in a target area of the federated learning.

4. The network node according to claim 1, wherein
the reception section performs the reception of the request for the selection from another network node that configures the system and executes an operation related to the federated learning.

5. A network node that configures a system defined in 3rd Generation Partnership Project (3GPP), the network node comprising:
a transmission section that transmits a request for selection of a terminal that is used in federated learning; and
a reception section that receives information on a candidate for the terminal that is used in the federated learning.

6. A network system that includes a first network node and a second network node and is defined in 3rd Generation Partnership Project (3GPP), wherein:
the first network node includes:
a transmission section that transmits a request for selection of a terminal that is used in federated learning; and
a reception section that receives information on a candidate for the terminal that is used in the federated learning, and
the second network node includes:
a reception section that performs reception of the request for the selection; and
a control section that selects the candidate for the terminal that is used in the federated learning in response to the reception of the request for the selection.

7. A communication method, comprising:
performing, by a network node that configures a system defined in 3rd Generation Partnership Project (3GPP), reception of a request for selection of a terminal that is used in federated learning; and
selecting, by the network node, a candidate for the terminal that is used in the federated learning in response to the reception of the request for the selection.
